# EUROPÄISCHE PATENTSCHRIFT

(11) **EP 2 132 814 B1**
(45) Veröffentlichungstag und Bekanntmachung des Hinweises auf die Patenterteilung: **22.02.2012**
(21) Anmeldenummer: 08700856.1
(22) Anmeldetag: 11.01.2008
(51) Int. Cl.: H01M 8/02, H01M 8/12, H01M 8/24

(54) **KONTAKTANORDNUNG UND VERFAHREN ZUM FÜGEN EINES BRENNSTOFFZELLENSTAPELS AUS ZUMINDEST EINER KONTAKTANORDNUNG**
CONTACT ARRANGEMENT AND METHOD FOR ASSEMBLING A FUEL CELL STACK FROM AT LEAST ONE CONTACT ARRANGEMENT
SYSTÈME DE MISE EN CONTACT ET PROCÉDÉ D'ASSEMBLAGE D'UN EMPILEMENT DE CELLULES ÉLECTROCHIMIQUES CONSTITUÉ D'AU MOINS UN SYSTÈME DE MISE EN CONTACT

(30) Priorität: 02.04.2007 DE 102007015712; 10.04.2007 DE 102007016905; 26.11.2007 DE 102007056752
(43) Veröffentlichungstag der Anmeldung: 16.12.2009
(73) Patentinhaber: Staxera GmbH, 01237 Dresden (DE)
(72) Erfinder: REINERT, Andreas, 01277 Dresden (DE)
(74) Vertreter: Schumacher & Willsau
(86) Internationale Anmeldenummer: PCT/DE2008/000048
(87) Internationale Veröffentlichungsnummer: WO 2008/119310

(56) Entgegenhaltungen:
- WO-A-2006/024246
- DE-T2- 69 915 056
- US-A1- 2004 043 278

## Beschreibung

Die Erfindung betrifft eine Kontaktanordnung für einen Brennstoffzellenstapel, insbesondere für einen SOFC-Brennstoffzellenstapel, mit einer Interkonnektoranordnung, die zur Herstellung einer elektrisch leitfähigen Verbindung über zumindest ein anodenseitig und zumindest ein kathodenseitig angeordnetes Kontaktelement zwischen einer Anode einer ersten Membran-Elektroden-Einheit und einer Kathode einer zweiten Membran-Elektroden-Einheit angeordnet ist.

Darüber hinaus bezieht sich die Erfindung auf ein Verfahren zum Fügen eines Brennstoffzellenstapels, insbesondere eines SOFC-Brennstoffzellenstapels, aus zumindest einer Kontaktanordnung, die eine Interkonnektoranordnung umfasst, die zur Herstellung einer elektrisch leitfähigen Verbindung über zumindest ein anodenseitig und zumindest ein kathodenseitig angeordnetes Kontaktelement zwischen einer Anode einer ersten Membran-Elektroden-Einheit und einer Kathode einer zweiten Membran-Elektroden-Einheit angeordnet wird.

Weiterhin betrifft die Erfindung einen Brennstoffzellenstapel, insbesondere einen SOFC-Brennstoffzellenstapel.

Üblicherweise werden mehrere einzelne Brennstoffzellen beziehungsweise Membran-Elektroden-Einheiten zur Erzielung einer größeren elektrischen Leistung, als eine einzelne Brennstoffzelle alleine zur Verfügung stellen kann, zu einem so genannten Brennstoffzellenstapel beziehungsweise Brennstoffzellenstack zusammengefasst. Dabei werden benachbarte Brennstoffzellen des Brennstoffzellenstapels jeweils durch diese verbindende Interkonnektoranordnungen sowohl elektrisch als auch mechanisch miteinander gekoppelt. Durch diese Kopplung der einzelnen Brennstoffzellen über die Interkonnektoranordnungen entstehen somit übereinander gestapelte, elektrisch in Serie geschaltete Brennstoffzellen, die zusammen den Brennstoffzellenstapel bilden. Herkömmlicherweise sind in den dem Stand der Technik angehörenden Interkonnektoranordnungen Gasverteilerstrukturen ausgebildet, über die Betriebsmittelgase zur jeweiligen Membran-Elektroden-Einheit geführt werden. Diese Gasverteilerstrukturen können beispielsweise teilweise durch ein Gehäuseteil der Interkonnektoranordnung ausgebildet werden. Zu diesem Zweck sind an dem Gehäuseteil der Interkonnektoranordnung üblicherweise kanalartig verlaufende Vertiefungen beziehungsweise Wölbungen oder Stege vorgesehen, die einen Kanalwandabschnitt von Gaskanälen ausbilden. Der andere Kanalwandabschnitt wird dann im verbauten Zustand der Interkonnektoranordnung im Brennstoffzellenstapel beispielsweise teilweise durch eine Membran-Elektroden-Einheit, insbesondere durch eine Anode oder Kathode einer benachbarten Membran-Elektroden-Einheit gebildet, so dass ein aus beiden Kanalwandabschnitten gebildeter Gaskanal unterhalb und oberhalb des Gehäuseteils entsteht. Derartige Gasverteilerstrukturen des Brennstoffzellenstapels werden häufig auch als Manifolds bezeichnet. Über diese Manifolds wird bewirkt, dass die Betriebsmittelgase für jede Membran-Elektroden-Einheit in entsprechende Elektrodenräume verteilt werden.

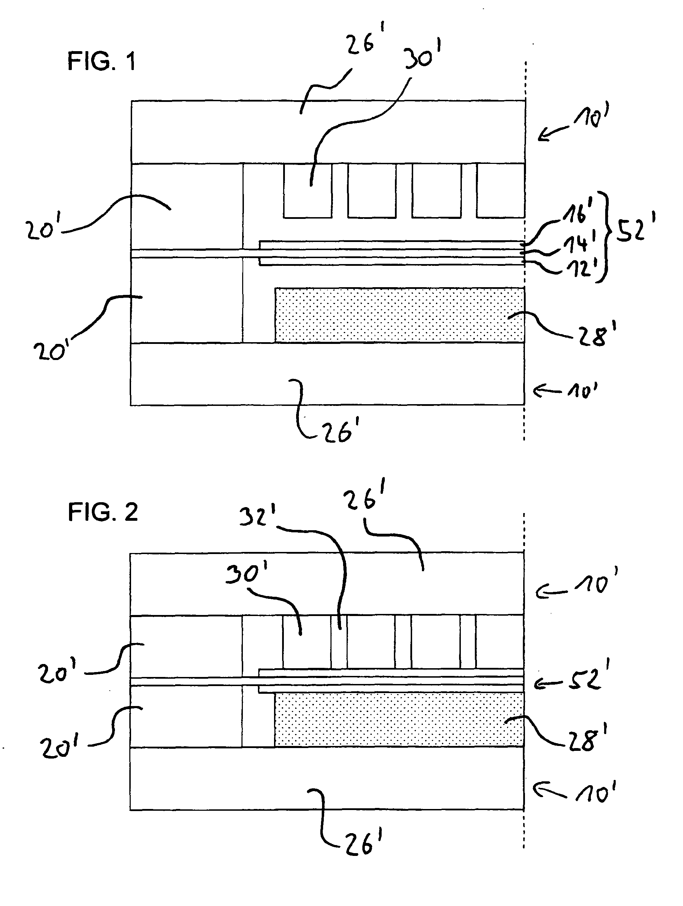

Allgemein werden die Brennstoffzellenstapel vorwiegend aus ferritischen Materialien hergestellt. Diese ferritischen Materialien weisen bei hohen Temperaturen eine geringe mechanische Stabilität auf, die sich in Deformationen durch Fließen oder Kriechen äußern kann. Dies ist insbesondere
dann der Fall, wenn ein Hohlraum durch eine aus dünnwandigem Blech geprägte Struktur gebildet wird, wie dies bei den vorgenannten Gasverteilerstrukturen mit den Gaskanälen der Fall ist. Zur Vermeidung solcher Deformationen werden häufig Spacer beziehungsweise Abstandshalter in den entsprechenden Hohlraum eingesetzt, die zwischen den Gehäuseteilen einer Interkonnektoranordnung und einer Membran-Elektroden-Einheit vorgesehen sind und damit zur Stabilisierung des Brennstoffzellenstapels beitragen. Bereits bekannte Ausführungen von Interkonnektoranordnungen sind beispielsweise mit Rahmen vorgesehen, die sich auch um den Brennstoffzellenstack herum in dessen Randbereich erstrecken, insbesondere durch ringförmige Gebilde im Bereich der Manifolds, die zumindest teilweise direkt aus dem Blech eines Gehäuseteils der Interkonnektoranordnung gewonnen werden. Bei verspanntem Brennstoffzellenstapel wird ein Kraftfluss dann vorwiegend durch diese Bereiche, das heißt beispielsweise durch das ringförmige Gebilde in dem Randbereich, geleitet. Eine derartige Kraftflussleitung beziehungsweise Kraftübertragung, die großteils durch den Rahmen im Randbereich und in geringerem Ausmaß durch den Zentrumsbereich der Manifolds des Brennstoffzellenstacks stattfindet, führt jedoch zu mehreren erheblichen Nachteilen. So verläuft der Kraftfluss beispielsweise durch ebenfalls im Randbereich des Brennstoffzellenstapels vorgesehenes Dichtmaterial, das in Fugen jeweils zwischen einzelnen Brennstoffzellen beziehungsweise Membran-Elektroden-Einheiten und Interkonnektoranordnungen angeordnet und meistens aus Glaskeramik ausgebildet ist. Glaskeramik neigt jedoch zum Kriechen oder Fließen, insbesondere bei höheren Temperaturen, die beim Betrieb des Brennstoffzellenstacks auftreten. Dadurch stehen die Dichtungen am Randbereich des Brennstoffzellenstacks und die weiter innen liegende elektrische Kontaktierung, insbesondere Kontaktelemente, des Brennstoffzellenstacks (Aktivfläche) über die Interkonnektoranordnung stets in Konkurrenz zu den am Rand befindlichen Dichtungen. Insbesondere beim Fügen des Brennstoffzellenstapels können sich durch Verwendung von Glaskeramikdichtungen Nachteile ergeben, die im Folgenden anhand der Figuren 1 und 2 näher erläutert werden. Figur 1 zeigt eine schematische Darstellung eines Ausschnitts eines dem Stand der Technik angehörenden Brennstoffzellenstapels vor der Durchführung eines Fügeverfahrens, insbesondere vor einem Sintervorgang. Hingegen zeigt Figur 2 eine schematische Darstellung eines Ausschnitts des Brennstoffzellenstapels von Figur 1 nach der Durchführung eines Fügeverfahrens, insbesondere nach dem Sintervorgang.

Im Allgemeinen ist Sintern beziehungsweise Sinterung ein urformendes Fertigungsverfahren. Üblicherweise werden beim Sintern insbesondere Pulvermassen zunächst so geformt, dass wenigstens ein minimaler Zusammenhalt der Pulverpartikel beziehungsweise Pulverkörner gegeben ist. Der vorgepresste so genannte "Grünling" wird im Anschluss durch Wärmebehandlung unterhalb der Schmelztemperatur verdichtet und ausgehärtet. Die Herstellung des Grünlings kann dabei entweder durch Verpressen von Pulvermassen oder durch Formung und anschließendes Trocknen erfolgen. Dabei läuft der Sintervorgang läuft in der Regel in drei Stadien ab, während derer sich die Porosität und das Volumen des "Grünlings" deutlich verringert. Im ersten Stadium erfolgt lediglich eine Verdichtung des "Grünlings", wohingegen sich im zweiten Stadium die offene Porosität deutlich verringert. Die Festigkeit der Sinterkörper beruht auf den im dritten Stadium gebildeten Sinterhälsen, die durch Oberflächendiffusion zwischen den Pulverpartikeln entstehen.

Im Falle von beispielsweise Fügegläsern beziehungsweise zu sinternden Glaskeramiken werden in der Regel jedoch keine Presslinge beziehungsweise vorgepresste "Grünlinge" verwendet. Vorzugsweise handelt es sich in diesem Fall um mittels Foliengießen beziehungsweise "Tape Casting" hergestellte Folien oder schablonendruckbare oder dispensierbare Pasten. Diese umfassen einen Binder, so dass zunächst vor der Sinterung eine Entbinderung vorgenommen wird. Nach der Entbinderung erhält man insbesondere bei keramischen Teilen beziehungsweise Glaskeramiken den sog. "Weißteil" oder "Weißling". Diese sind sehr porös und weisen eine minimale Festigkeit auf. Nach der Entbinderung werden die "Weißlinge" durch Sintern verdichtet, so dass die "Weißlinge" ihre entsprechende Festigkeit nach dem Sinterprozess erhalten.

Der in den Figuren 1 und 2 teilweise dargestellte Brennstoffzellenstapel, insbesondere ein SOFC-Brennstoffzellenstapel, umfasst eine Bipolarplatte beziehungsweise eine Interkonnektoranordnung 10', eine Membran-Elektroden-Einheit (MEA) 52' sowie Anoden- und Kathodenkotaktelemente 28', 30'. Weiterhin sind zu sinternde Glasfügeteile in der Form von Glasdichtelementen 20' jeweils an einer Ober- und Unterseite der MEA 52' gesehen in den Figuren 1 und 2 vorgesehen. Gemäß dem Stand der Technik ist somit vorgesehen, dass die Glaskeramikdichtungen 20' auf beiden Seiten der MEA 52' angeordnet werden. Wegen der beim Sintern zu berücksichtigen Schwindung der Glaskeramikdichtungen 20' liegen im so genannten "weißen" Zustand Zwischenräume zwischen den Elektroden (Anode 12' oder Kathode 16') der MEA 52' und den Kontaktelementen 28', 30' vor, d.h. bei dem in Figur 1 dargestellten Zustand wird noch keine elektrisch leitfähige Verbindung über die entsprechenden Interkonnektoranordnungen hergestellt, da die Kontaktelemente 28' und 30' noch nicht mit den entsprechenden Elektroden 12', 16' der MEA
52' in Berührung stehen. Erst nach dem Fügen beziehungsweise nach der Durchführung des Sintervorgangs werden die elektrisch leitfähigen Verbindungen über die entsprechenden Kontaktelemente 28', 30' der jeweiligen Interkonnektoranordnung 10' hergestellt, insbesondere durch eine Schwindung der Glaskeramikdichtungen 20' durch Sintern sowie viskosem Fließen. Dies geschieht unter permanenter mechanischer Belastung des Brennstoffzellenstapels beziehungsweise unter Verspannung des Brennstoffzellenstapels, da ansonsten eine laterale Schwindung der Glaskeramikdichtungen 20' auftreten kann, was zu Undichtigkeiten führen kann. Die Herstellung der elektrisch leitfähigen Verbindung durch die entsprechende Interkonnektoranordnung 10' kann erst nach dem Absetzen der Glaskeramikdichtungen 20' durch Sintern und viskosem Fließen bei hohen Temperaturen erfolgen. Die Fügetemperaturen sind jedoch zu niedrig, um ein Versintern der Kontaktelemente 28', 30' zu erreichen. Somit wird die elektrische Verbindung der Interkonnektoranordnung 10' mit der MEA 52' in der Regel nur durch Kraftschluss hergestellt. Dabei findet eine Anpassung der Kontaktoberflächen der Kontaktelemente 28', 30' der Interkonnektoranordnung 10' nur eingeschränkt statt. Es liegt somit weder Formnoch Stoffschluss zwischen den Kontaktelementen 28', 30' und der MEA 52' vor. Darüber hinaus ist der Aufbau des in den Figuren 1 und 2 teilweise gezeigten Brennstoffzellenstapels 52' äußerst aufwändig, da an beiden Seiten der MEA 52' ein durch die Glaskeramikdichtungen 20' ausgebildeter Glasrahmen vorgesehen ist, um die Dichtigkeit für die Gäsverteilerstrukturen innerhalb der Interkonnektoranordnung zu gewährleisten. Ferner führen aufgrund des Aufbaus ungleiche mechanische Widerstände bei den Glaskeramikdichtungen 20' und den Kontaktflächen beziehungsweise Kontaktelementen 28', 30' auf beiden Seiten der MEA 52' zu Biegemomenten in der MEA 52'. Diese können zum Bruch der MEA 52' führen, die üblicherweise äußerst fragil ist. Dies ist zum Beispiel dann der Fall, wenn der als Anodenkontaktelement ausgebildete Nickelschaum 28' weicher als die Glaskeramikdichtungen 20' und als die dem Nickelschaum 28' gegenüberliegenden Kathodenkontaktelemente 30' beziehungsweise Kontaktstege 30' ausgebildet ist. Die Kontaktstege 30' drücken sich am Rand der MEA 52' in den Nickelschaum 28'. Dies kann zum Bruch der MEA 52' führen.

Aus der WO2006/024246 A ist eine Kontaktanordnung für einen Brennstoffzellenstapel mit einer Interkonnektoranordnung bekannt, die zur Herstellung einer elektrisch leitfähigen Verbindung über zumindest ein anodenseitig und zumindest ein kathodenseitig angeordnetes Kontaktelement zwischen einer Anode einer ersten Membran-Elektroden-Einheit und einer Kathode einer zweiten Membran-Elektroden-Einheit angeordnet ist, wobei zwischen der der Anode und der der Kathode zugewandten Seite der Interkonnektoranordnung Komponenten vorgesehen sind, die mit der ersten und der zweiten Membran-Elektroden-Einheit derart gekoppelt sind, dass die elektrisch leitfähige Verbindung über das anodenseitige oder das kathodenseitige Kontaktelement durch Sintern der Komponenten herstellbar ist.

Aufgrund der vorstehend beschriebenen Problematik ist es daher Aufgabe der Erfindung, die gattungsgemäßen Kontaktanordnungen und Verfahren zum Fügen von Brennstoffzellenstapeln derart weiterzubilden, dass die vorgenannten Nachteile zumindest teilweise überwunden werden können und insbesondere die Bruchgefahr von Membran-Elektroden-Einheiten in Brennstoffzellenstapeln zu verringern.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die erfindungsgemäße Kontaktanordnung baut auf dem gattungsgemäßen Stand der Technik dadurch auf, dass nur auf einer Seite der Interkonnektoranordnung, der der Anode oder der der Kathode zugewandten Seite der Interkonnektoranordnung, zumindest eine zu sinternde Komponente vorgesehen und mit der ersten oder zweiten Membran-Elektroden-Einheit derart gekoppelt ist, dass die elektrisch leitfähige Verbindung über das anodenseitige oder kathodenseitige Kontaktelement durch Sintern der zu sinternden Komponente herstellbar ist. Dadurch wird der Aufbau des Brennstoffzellenstapels deutlich vereinfacht, da beispielsweise nur eine Glaskeramikdichtung beziehungsweise nur ein Glaskeramikdichtungsrahmen als zu sinternde Komponente auf einer E-lektrodenseite der MEA beziehungsweise der Interkonnektoranordnung vorgesehen ist, insbesondere der Anodenseite zur Anodenraumabdichtung, und gesintert wird, so dass durch Schwindung und viskoses Fließen der Glaskeramikdichtung das entsprechende Kontaktelement die elektrisch leitfähige Verbindung zwischen der entsprechenden MEA und der Interkonnektoranordnung herstellt. Die Sinterung schafft somit durch das Absetzen im Schwindungsprozess und das viskose Fließen die Grundlage zur Kontaktausbildung des entsprechenden Kontaktelements, insbesondere des Anodenkontaktelements mit der Anode der entsprechenden MEA. Ein Formschluss kommt beispielsweise dann zustande, wenn beispielsweise ein Nickelschaum als Anodenkontaktelement weich und verformbar ist. Weiterhin kann bei geeigneten Materialien von beispielsweise dem Anodenkontaktelement und der Anode auch ein Stoffschluss zustande kommen; beispielsweise kann ein Stoffschluss im Falle des Nickelschaumes als Anodenkontaktelement und einer Nickelanode der entsprechenden MEA zustande kommen, welche sich durch einen Diffusionsprozess verbinden. Bei diesem Aufbau des Brennstoffzellenstapels wird die elektrisch leitfähige Verbindung an der Kathodenseite vorzugsweise über ein entsprechendes Kathodenkontaktelement bereits bei Raumtemperatur hergestellt, wobei die Interkonnektoranordnung ausschließlich über dieses kathodenseitige Kontaktelement mit der entsprechenden MEA gekoppelt ist, das neben der mechanischen Kopplung die elektrisch leitfähige Verbindung hergestellt. Im Falle von einer Mehrzahl solcher kathodenseitigen Kontaktelemente wird eine gleichförmige mechanische Anpressung der MEA über die gesamte Fläche der MEA, insbesondere der Kathodenseite, ermöglicht. Insbesondere ist die Interkonnektoranordnung ausschließlich im Aktivbereich des Brennstoffzellenstapels über die kathodenseitigen Kontaktelemente mit der Kathode der MEA gekoppelt, d.h. zumindest im dem Bereich, in dem die elektrische Kontaktierung von Interkonnektoranordnung und MEA hergestellt wird. Vorzugsweise können für einen derartigen Aufbau des Brennstoffzellenstapels Interkonnektoranordnungen beziehungsweise Biopolarplatten verwendet werden, die in der Form eines Blech-Kassettendesigns ausgestaltet sind oder im so genannten Einplattendesign, das durch endkonturnahe Fertigung beziehungsweise Near-Net-Shape erzielt wird, ausgebildet werden. Bei den vorgenannten Fügeteilen handelt es sich insbesondere um so genannte Innenfügungen oder MEA-Fügungen. Selbstverständlich sind in einem Brennstoffzellenstack andere oder weitere Fügestellen, beispielsweise Manifoldabdichtungen, vorgesehen, deren Auslegung und Gestaltung auf die MEA-Fügung abgestimmt werden müssen. Durch die erfindungsgemäße Kontaktanordnung ergibt sich ein Brennstoffzellenstapelaufbau, bei dem die Kathodenkontaktelemente durch den sofortigen, bereits bei Raumtemperatur vorliegenden Kontakt mit der Kathodenseite der MEA bei Raumtemperatur ausgebildet werden können und im Idealfall während der Sinterung der Glaskeramikdichtung an die Kathode formschlüssig und/oder stoffschlüssig anbinden. Der Einsatz von Lösemitteln oder feuchten Pasten kann diesen Effekt zusätzlich verbessern oder unterstützen. Insbesondere wird der Brennstoffzellenstapelaufbau dadurch deutlich vereinfacht, da nur eine rahmenförmige Glasfügung beziehungsweise Glaskeramikdichtung an der Anodenseite ausgebildet wird. Somit zeichnen sich derartige gefügte Brennstoffzellenstapel durch eine hohe mechanische Belastbarkeit aus, wobei ein MEA-Bruch weitestgehend vermieden werden kann.

Die erfindungsgemäße Kontaktanordnung kann in vorteilhafter Weise derart weitergebildet werden, dass nur auf der der Anode zugewandten Seite der Interkonnektoranordnung die zu sinternde Komponente angeordnet ist. Wie bereits vorstehend erläutert, wird vorzugsweise eine Glaskeramikdichtung als zu sinternde Komponente zwischen der Anode der entsprechenden MEA und der Interkonnektoranordnung, insbesondere einem Bipolarplattenbauteil der Interkonnektoranordnung, angeordnet und gesintert.

Weiterhin kann die erfindungsgemäße Kontaktanordnung so ausgebildet werden, dass die Interkonnektoranordnung auf ihrer der Kathode zugewandten Seite ausschließlich über Kontaktelemente mit der zweiten Membran-Elektroden-Einheit gekoppelt ist. Dabei kann die Kopplung der entsprechenden Kontaktelemente mit der Kathode der entsprechenden MEA bereits bei Raumtemperatur vorgenommen werden und bindet im Idealfall während des Sintervorgangs formschlüssig und/oder stoffschlüssig an die Kathode der entsprechenden MEA an. Dadurch, dass nur auf einer Seite der der Interkonnektoranordnung (Anodenseite) zu sinternde Glaskeramikdichtungen vorgesehen sind, während auf der anderen Seite der Interkonnektoranordnung (Kathodenseite) bereits eine mechanische Kopplung der auf der Kathodenseite angeordneten Kontaktelemente (Kathodenkontaktelemente) mit der entsprechenden MEA vorliegt, kann somit ein Form- und/oder Stoffschluss zumindest der Kathodenkontaktelemente erzielt werden.

Darüber hinaus kann die erfindungsgemäße Kontaktanordnung derart realisiert werden, dass die zu sinternde Komponente durch eine Glaskeramikdichtung ausgebildet ist. Insbesondere ist die Glaskeramikdichtung als eine rahmenförmige Glaskeramikdichtung ausgebildet, die sich im Wesentlichen entlang des Umfangs der MEA, insbesondere des Elektrolyten der MEA, erstreckt.

Ferner kann die erfindungsgemäße Kontaktanordnung so ausgestaltet werden, dass auf der der Anode zugewandten Seite der Interkonnektoranordnung zumindest ein als Nickelschaum ausgebildetes Kontaktelement zur Herstellung der elektrisch leitfähigen Verbindung mit der ersten Membran-Elektroden-Einheit vorgesehen ist.

Des Weiteren kann die erfindungsgemäße Kontaktanordnung derart verwirklicht werden, dass eine Mehrzahl von der Kathode zugewandten elektrisch leitfähigen Kontaktelementen der Interkonnektoranordnung vorgesehen ist, wobei die Mehrzahl der kathodenseitig vorgesehenen elektrisch leitfähigen Kontaktelemente gleichmäßig über einer gesamten Fläche der Kathode der zweiten Membran-Elektroden-Einheit zur Kopplung mit der zweiten Membran-Elektroden-Einheit angeordnet ist. Vorzugsweise wird in diesem Fall die Kathode äußerst großflächig ausgebildet; insbesondere wird die Kathode der MEA derart ausgebildet, dass sie flächenmäßig größer als die Anode ist. Besonders bevorzugt wird die Kathode dabei nahezu so groß wie der Elektrolyt der MEA ausgebildet. Weiterhin befinden sich die Kathodenkontaktelemente beziehungsweise die Kathodenkontaktstege über der gesamten Fläche der MEA, vorzugsweise in regelmäßigen Abständen zueinander, wobei diese Fläche nahezu der Kathodenfläche oder der Elektrolytfläche (gesehen in Brennstoffzellenstapelrichtung) entspricht. Insbesondere kann ein Kathodenflowfield durch die Kathode und die Kathodenkontaktstege sowie einem Gehäuseteil der Interkonnektoranordnung ausgebildet werden. Die Kathodenkontaktstege können sowohl als separate Bauteile ausgebildet sein als auch strukturell in das Gehäuseteil der Interkonnektoranordnung integriert sein; jedoch sind auch Kombinationen aus beidem möglich. Ebenso denkbar sind auch Ausbildungen, bei denen das Kathodenflowfield durch Stege direkt aus dem Gehäuseteil der Interkonnektoranordnung zumindest teilweise geformt wird, die über bestimmte elektrisch leitfähige dünne Schichten mit der entsprechenden MEA in Berührung gebracht werden. Derartige Schichten können beispielsweise durch Beschichtungstechniken wie Walzenbeschichtung (engl. Rollcoating) oder Sprühbeschichten (engl. Spraycoating) auf die entsprechenden Stege aufgebracht werden. Hingegen kann ein Anodenflowfield beispielsweise durch eine Schaumstruktur, vorzugsweise aus Nickel, ausgebildet werden. Ebenso kann das Anodenflowfield strukturell in die Interkonnektoranordnung integriert sein. Auch in diesem Fall ist eine Kombination möglich.

Vorzugsweise wird die erfindungsgemäße Kontaktanordnung so weitergebildet, dass eine Fläche der Kathode der jeweiligen Membran-Elektroden-Einheit im Wesentlichen der Fläche eines Elektrolyten der jeweiligen Membran-Elektroden-Einheit entspricht.

In diesem Zusammenhang kann auch vorgesehen sein, die erfindungsgemäße Kontaktanordnung derart auszubilden, dass eine Fläche der Kathode und/oder des Elektrolyten der jeweiligen Membran-Elektroden-Einheit größer als eine Fläche der Anode der jeweiligen Membran-Elektroden-Einheit ist.

Das erfindungsgemäße Verfahren baut auf dem gattungsgemäßen Stand der Technik dadurch auf, dass nur auf einer Seite der Interkonnektoranordnung, der der Anode oder der der Kathode zugewandten Seite der Interkonnektoranordnung, zumindest eine zu sinternde Komponente vorgesehen und mit der ersten oder zweiten Membran-Elektroden-Einheit derart gekoppelt wird, dass die elektrisch leitfähige Verbindung über das anodenseitige oder kathodenseitige Kontaktelement durch Sintern der zu sinternden Komponente hergestellt wird. Dadurch ergeben sich die im Zusammenhang mit der erfindungsgemäßen Kontaktanordnung erläuterten Vorteile auf gleiche oder ähnliche Weise, weshalb zur Vermeidung von Wiederholungen auf die entsprechenden Ausführungen im Zusammenhang mit der erfindungsgemäßen Kontaktanordnung verwiesen wird. Gleiches gilt sinngemäß für die folgenden bevorzugten Ausführungsformen des erfindungsgemäßen Verfahrens, weshalb zur Vermeidung von Wiederholungen auch diesbezüglich auf die entsprechenden Ausführungen im Zusammenhang mit der erfindungsgemäßen Kontaktanordnung verweisen wird.

Das erfindungsgemäße Verfahren kann in vorteilhafter Weise derart weitergebildet werden, dass nur auf der der Anode zugewandten Seite der Interkonnektoranordnung die zu sinternde Komponente angeordnet wird.

Weiterhin kann das erfindungsgemäße Verfahren so realisiert werden, dass die Interkonnektoranordnung auf ihrer der Kathode zugewandten Seite ausschließlich über Kontaktelemente mit der zweiten Membran-Elektroden-Einheit gekoppelt wird.

Darüber hinaus kann das erfindungsgemäße Verfahren derart ausgestaltet werden, dass die elektrisch leitfähige Verbindung durch Sintern einer Glaskeramikdichtung als zu sinternde Komponente hergestellt wird.

Des Weiteren kann das erfindungsgemäße Verfahren so verwirklicht werden, dass auf der der Anode zugewandten Seite der Interkonnektoranordnung zumindest ein als Nickelschaum ausgebildetes Kontaktelement zur Herstellung der elektrisch leitfähigen Verbindung mit der ersten Membran-Elektroden-Einheit angeordnet wird.

Vorzugsweise wird das erfindungsgemäße Verfahren derart ausgebildet, dass eine Mehrzahl von der Kathode zugewandten elektrisch leitfähigen Kontaktelementen) der Interkonnektoranordnung angeordnet wird, wobei die Mehrzahl der kathodenseitig vorgesehenen elektrisch leitfähigen Kontaktelemente gleichmäßig über einer gesamten Fläche der Kathode der zweiten Membran-Elektroden-Einheit zur Kopplung mit der zweiten Membran-Elektroden-Einheit angeordnet wird.

Ferner kann das erfindungsgemäße Verfahren so weitergebildet werden, dass eine Fläche der Kathode der jeweiligen Membran-Elektroden-Einheit derart ausgebildet wird, dass sie im Wesentlichen der Fläche eines Elektrolyten der jeweiligen Membran-Elektroden-Einheit entspricht.

In diesem Zusammenhang wird das erfindungsgemäße Verfahren vorzugsweise so umgesetzt, dass eine Fläche der Kathode und/oder des Elektrolyten der jeweiligen Membran-Elektroden-Einheit derart ausgebildet wird, dass sie größer als eine Fläche der Anode der jeweiligen Membran-Elektroden-Einheit ist.

Der erfindungsgemäße Brennstoffzellenstapel umfasst zumindest eine erfindungsgemäße Kontaktanordnung und ist vorzugsweise nach dem erfindungsgemäßen Verfahren gefügt. Dadurch ergeben sich sinngemäß die gleichen Vorteile, die im Zusammenhang mit der erfindungsgemäßen Kontaktanordnung erläutert sind.

Eine bevorzugte Ausführungsform der Erfindung wird nachfolgend anhand der Figuren beispielhaft erläutert.

Es zeigen:
- Figur 1: eine schematische Darstellung eines Ausschnitts eines dem Stand der Technik angehörenden Brennstoffzellenstapels vor der Durchführung eines Fügeverfahrens;
- Figur 2: eine schematische Darstellung eines Ausschnitts des Brennstoffzellenstapels von Figur 1 nach der Durchführung eines Fügeverfahrens;
- Figur 3: eine schematische Darstellung eines Ausschnitts eines Brennstoffzellenstapels vor der Durchführung des erfindungsgemäßen Fügeverfahrens;
- Figur 4: eine schematische Darstellung eines Ausschnitts des Brennstoffzellenstapels nach der Durchführung des erfindungsgemäßen Fügeverfahrens; und
- Figur 5: eine schematische Darstellung eines Ausschnitts des Brennstoffzellenstapels mit mehreren Membran-Elektroden-Einheiten und Interkonnektoranordnungen nach der Durchführung des erfindungsgemäßen Fügeverfahrens.

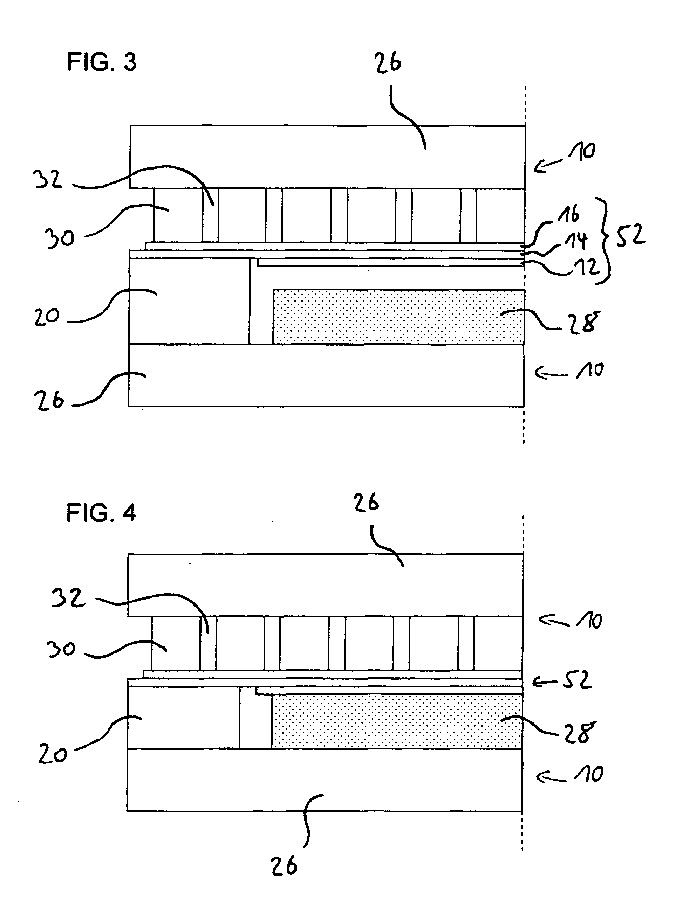

Figur 3 zeigt eine schematische Darstellung eines Ausschnitts eines Brennstoffzellenstapels 34, insbesondere eines SOFC-Brennstoffzellenstapels, vor der Durchführung des erfindungsgemäßen Fügeverfahrens. Insbesondere sind in Figur 3 eine Membran-Elektroden-Einheit (MEA) 52 und zwei teilweise dargestellte Interkonnektoranordnungen 10 des Brennstoffzellenstapels 34 gezeigt, die oberhalb und unterhalb der MEA 52 angeordnet sind. Bei dem in Figur 3 teilweise dargestellten Brennstoffzellenstapel 34 liegen die nachstehend näher erläuterten durch Sintern zu fügenden Komponenten des Brennstoffzellenstapels im so genannten "weißen" Zustand vor. Das heißt, dass die durch Sintern zu fügenden Komponenten des Brennstoffzellenstapels 34 so genannte "Weißlinge" darstellen.

Hingegen zeigt Figur 4 eine schematische Darstellung des Ausschnitts des Brennstoffzellenstapels 34 von Figur 3 nach der Durchführung des erfindungsgemäßen Fügeverfahrens, insbesondere nach dem Sintern der zu fügenden und nachstehend näher erläuterten Komponenten des Brennstoffzellenstapels 34.

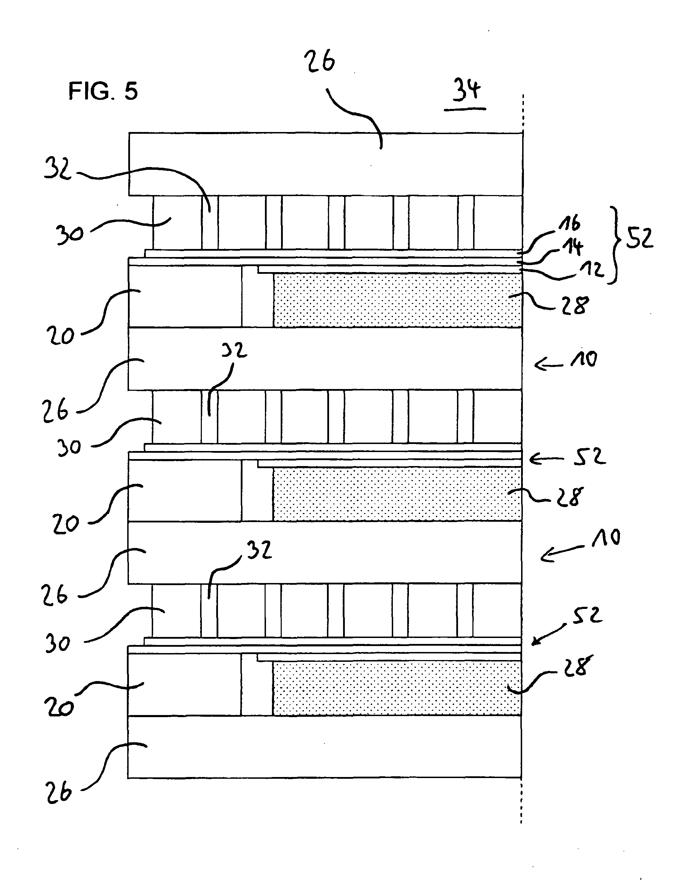

Zunächst wird auf den grundlegenden Aufbau des Brennstoffzellenstapels 34 im gefügten Zustand unter Bezugnahme auf Figur 5 näher eingegangen, bevor auf die Durchführung des erfindungsgemäßen Verfahrens unter Bezugnahme auf die Figuren 3 und 4 detailliert eingegangen wird. Figur 5 zeigt eine schematische Darstellung eines Ausschnitts des Brennstoffzellenstapels 34 mit mehreren Membran-Elektroden-Einheiten (MEAs) 52 (drei MEAs sind in Figur 5 beispielhaft gezeigt) und mehreren Interkonnektoranordnungen 10 (zwei vollständige Interkonnektoranordnungen sind in Figur 5 beispielhaft gezeigt) nach der Durchführung des erfindungsgemäßen Fügeverfahrens. Der Brennstoffzellenstapel 34 umfasst mehrere Wiederholeinheiten, die jeweils aus einer Membran-Elektroden-Einheit 52 und eine Interkonnektoranordnung 10 bestehen. In Figur 5 sind insbesondere zwei vollständige Wiederholeinheiten dargestellt, wobei der Brennstoffzellenstapel 34 aus beliebig vielen solchen Wiederholeinheiten bestehen kann. Wie aus Figur 5 ersichtlich ist, sind die Interkonnektoranordnungen 10 üblicherweise zwischen zwei benachbarten Membran-Elektroden-Einheiten 52 angeordnet, wobei jede Membran-Elektroden-Einheit 52 jeweils eine Anode 12, einen Elektrolyten 14 sowie eine Kathode 16 aufweist. Insbesondere bildet im Rahmen dieser Beschreibung jede Membran-Elektroden-Einheit 52 und eine mit der Anode 12 der Membran-Elektroden-Einheit 52 in Berührung stehende Interkonnektoranordnung 10 eine Wiederholeinheit des Brennstoffzellenstapels 34 aus.

Wie aus Figur 5 anhand der vollständig dargestellten Interkonnektoranordnungen 10 ersichtlich ist, umfasst jede Interkonnektoranordnung 10 ein Gehäuseteil beziehungsweise ein Bipolarplattenbauteil 26, das an dessen Oberseite gesehen in Figur 5 über eine Glaskeramikdichtung 20 unmittelbar mit dem Elektrolyten 14 einer über der Interkonnektoranordnung 10 angeordneten Membran-Elektroden-Einheit 52 gekoppelt ist. Weiterhin ist das Gehäuseteil 26 an dessen Unterseite ausschließlich über mehrere daran angebrachte Kontaktstege 30 mit der Kathode 16 einer unter dieser Interkonnektoranordnung 10 angeordneten Membran-Elektroden-Einheit 52 gekoppelt. Dabei können beliebig viele Kontaktstege 30 vorliegen. Das Gehäuseteil 26, die Glaskeramikdichtung 20 und die Anode 12 sowie teilweise der Elektrolyt 14 bilden einen Zwischenraum aus, in dem ein Nickelschaum 28 aufgenommen wird, der den Zwischenraum teilweise ausfüllt. An der Unterseite des Gehäuseteils 26, das heißt zwischen dem Gehäuseteil 26 und der unteren Membran-Elektroden-Einheit 52, werden anhand der an der Unterseite des Gehäuseteils 26 vorgesehenen Kontaktstege 30 und der unteren Membran-Elektroden-Einheit 52 jeweils Gaskanäle 32 ausgebildet. Vorzugsweise wird in diesem Fall ein sauerstoffreiches Gas oder reiner Sauerstoff durch die Gaskanäle 32 geleitet, wohingegen ein wasserstoffreiches Gas oder reiner Wasserstoff durch den Nickelschaum 28 sowie den Zwischenraum geleitet wird. Ferner ist aus Figur 5 ersichtlich, dass sich die Anode 12 jeder Membran-Elektroden-Einheit 52 senkrecht zur Brennstoffzellenstapelrichtung (in Figur 5 nach links) nahezu bis zu der Glaskeramikdichtung 20 erstreckt, die den Zwischenraum am Umfangsbereich des Brennstoffzellenstapels 34 begrenzt. Hingegen erstrecken sich der Elektrolyt 14 und die Kathode 16 radial nahezu bis zum Außenumfang der Glaskeramikdichtung 20, wobei radial weiter außen liegende Gaszuführungen beziehungsweise Manifold-Abschnitte des Brennstoffzellenstapels 34 in diesem Fall nicht dargestellt sind. Der Elektrolyt 14 und die Kathode 16 weisen somit im Wesentlichen die gleiche (projizierte) Fläche gesehen in Brennstoffzellenstapelrichtung auf, während die Fläche der Anode 12 im Vergleich zu den Flächen des Elektrolyts 14 und der Kathode 16 deutlich geringer ist.

Das erfindungsgemäße Verfahren zum Fügen des Brennstoffzellenstapels gestaltet sich wie folgt. Wie aus Figur 3 ersichtlich ist, steht der in dem Zwischenraum angeordnete Nickelschaum 28 zwischen dem Gehäuseteil 26 der Interkonnektoranordnung 10 und der Anode 12 nur mit dem Gehäuseteil 26 in elektrisch leitfähiger Verbindung und mechanischer Kopplung. Dies rührt daher, dass die Glaskeramikdichtung in diesem in Figur 3 dargestellten Ausschnitt des Brennstoffzellenstapels noch vor der Durchführung des Sinterns eine Dicke in Brennstoffzellenstapelrichtung aufweist, die grö-βer als die Dicke des Nickelschaums 28 und der Anode 12 ist. Hingegen stehen die Kontaktstege an der Oberseite der. Membran-Elektroden-Einheit 52 bereits vor dem Sintern mit der Kathode 16 der Membran-Elektroden-Einheit 52 sowie dem Gehäuseteil 26 einer weiteren Interkonnektoranordnung in elektrisch leitfähiger Verbindung sowie mechanischer Kopplung. Wie aus Figur 4 ersichtlich ist, stehen nach dem Sintern nunmehr die Anode 12 der Membran-Elektroden-Einheit 52 durch das Sintern und viskoses Fließen der Glaskeramikdichtung 20 und das Gehäuseteil 26 über den Nickelschaum 28 in elektrisch leitfähiger Verbindung und sind weiterhin mechanisch miteinander gekoppelt. Hingegen verbleibt auf der Kathodenseite der Membran-Elektroden-Einheit 52 die unmittelbare und ausschließliche Kopplung mit den Kontaktstegen 30 der oberen weiteren Interkonnektoranordnung 10 zur Aufrechterhaltung der elektrisch leitfähigen Verbindung sowie der mechanischen Kopplung unverändert bestehen. Dabei binden die auf der Kathodenseite der Membran-Elektroden-Einheit 52 angeordneten Kontaktstege 30 während des Sintervorgangs der Glaskeramikdichtung 20 form- und/oder stoffschlüssig an die Kathode der entsprechenden Membran-Elektroden-Einheit 52 an.

Es wird angemerkt, dass die Geometrie des in den Figuren 3 bis 5 zumindest teilweise dargestellten Brennstoffzellenstapels stark vereinfacht beziehungsweise schematisiert ist. In den Figuren 3 bis 5 sind zur besseren Veranschaulichung beispielsweise die Glaskeramikdichtungen 20 in einer Dicke in Brennstoffzellenstapelrichtung dargestellt, die vor der Sinterung größer als die Dicke des Nickelschaums 28 und der Anode 12 und nach der Sinterung gleich der Dicke des Nickelschaums 28 und der Anode 12 ist. Jedoch werden die Dicken der Glaskeramikdichtungen 20 vorzugsweise eher dünn ausgelegt, wobei der zur Kontaktierung des Nickelschaums 28 erforderliche Höhenausgleich durch entsprechende Ausgestaltung anderer Komponenten erfolgen kann; so kann beispielsweise die Bipolarplatte mit dickeren Randbereichen und/oder eingesenktem Flowfield realisiert werden.

### Bezugszeichenliste:

- 10': Interkonnektoranordnung
- 12': Anode der Membran-Elektroden-Einheit
- 14': Elektrolyt der Membran-Elektroden-Einheit
- 16': Kathode der Membran-Elektroden-Einheit
- 20': Glaskeramikdichtungen oberhalb und unterhalb der MEA
- 26': Gehäuseteil
- 28': Nickelschaum
- 30': Kontaktsteg
- 32': Gaskanal
- 52': Membran-Elektroden-Einheit (MEA)
- 10: Interkonnektoranordnung
- 12: Anode der Membran-Elektroden-Einheit
- 14: Elektrolyt der Membran-Elektroden-Einheit
- 16: Kathode der Membran-Elektroden-Einheit
- 20: Glaskeramikdichtung
- 26: Gehäuseteil
- 28: Nickelschaum
- 30: Kontaktsteg
- 32: Gaskanal
- 34: Brennstoffzellenstapel
- 52: Membran-Elektroden-Einheit

## Patentansprüche

1. Kontaktanordnung für einen Brennstoffzellenstapel, insbesondere für einen SOFC-Brennstoffzellenstapel, mit einer Interkonnektoranordnung (10), die zur Herstellung einer elektrisch leitfähigen Verbindung über zumindest ein anodenseitig und zumindest ein kathodenseitig angeordnetes Kontaktelement (28, 32) zwischen einer Anode (12) einer ersten Membran-Elektroden-Einheit (52) und einer Kathode (16) einer zweiten Membran-Elektroden-Einheit (52) angeordnet ist, **dadurch gekennzeichnet, dass** nur auf einer Seite der Interkonnektoranordnung (10), der der Anode (12) oder der der Kathode (16) zugewandten Seite der Interkonnektoranordnung (10), zumindest eine zu sinternde Komponente vorgesehen und mit der ersten oder zweiten Membran-Elektroden-Einheit (52) derart gekoppelt ist, dass die elektrisch leitfähige Verbindung über das anodenseitige oder kathodenseitige Kontaktelement (28, 32) durch Sintern der zu sinternden Komponente (20) herstellbar ist.

2. Kontaktanordnung nach Anspruch 1, **dadurch gekennzeichnet, dass** nur auf der der Anode (12) zugewandten Seite der Interkonnektoranordnung (10) die zu sinternde Komponente (20) angeordnet ist.

3. Kontaktanordnung nach Anspruch 1 oder 2, **dadurch gekennzeichnet, dass** die Interkonnektoranordnung (10) auf ihrer der Kathode zugewandten Seite ausschließlich über Kontaktelemente (30) mit der zweiten Membran-Elektroden-Einheit (52) gekoppelt ist.

4. Kontaktanordnung nach einem der Ansprüche 1 bis 3, **dadurch gekennzeichnet, dass** die zu sinternde Komponente durch eine Glaskeramikdichtung (20) ausgebildet ist.

5. Kontaktanordnung nach einem der Ansprüche 1 bis 4, **dadurch gekennzeichnet, dass** auf der der Anode (12) zugewandten Seite der Interkonnektoranordnung (10) zumindest ein als Nickelschaum ausgebildetes Kontaktelement (28) zur Herstellung der elektrisch leitfähigen Verbindung mit der ersten Membran-Elektroden-Einheit (52) vorgesehen ist.

6. Kontaktanordnung nach einem der Ansprüche 1 bis 5, **dadurch gekennzeichnet, dass** eine Mehrzahl von der Kathode (16) zugewandten elektrisch leitfähigen Kontaktelementen (30) der Interkonnektoranordnung (10) vorgesehen ist, wobei die Mehrzahl der kathodenseitig vorgesehenen elektrisch leitfähigen Kontaktelemente (30) gleichmäßig über einer gesamten Fläche der Kathode (16) der zweiten Membran-Elektroden-Einheit (52) zur Kopplung mit der zweiten Membran-Elektroden-Einheit (52) angeordnet ist.

7. Kontaktanordnung nach einem der Ansprüche 1 bis 6, **dadurch gekennzeichnet, dass** eine Fläche der Kathode (16) der jeweiligen Membran-Elektroden-Einheit (52) im Wesentlichen der Fläche eines Elektrolyten (14) der jeweiligen Membran-Elektroden-Einheit (52) entspricht.

8. Kontaktanordnung nach einem der Ansprüche 1 bis 7, **dadurch gekennzeichnet, dass** eine Fläche der Kathode (16) und/oder des Elektrolyten (14) der jeweiligen Membran-Elektroden-Einheit (52) größer als eine Fläche der Anode (12) der jeweiligen Membran-Elektroden-Einheit (52) ist.

9. Verfahren zum Fügen eines Brennstoffzellenstapels, insbesondere eines SOFC-Brennstoffzellenstapels, aus zumindest einer Kontaktanordnung, die eine Interkonnektoranordnung (10) umfasst, die zur Herstellung einer elektrisch leitfähigen Verbindung über zumindest ein anodenseitig und zumindest ein kathodenseitig angeordnetes Kontaktelement (28, 32) zwischen einer Anode (12) einer ersten Membran-Elektroden-Einheit (52) und einer Kathode (16) einer zweiten Membran-Elektroden-Einheit (52) angeordnet wird, **dadurch gekennzeichnet, dass** nur auf einer Seite der Interkonnektoranordnung (10), der der Anode (12) oder der der Kathode (16) zugewandten Seite der Interkonnektoranordnung (10), zumindest eine zu sinternde Komponente vorgesehen und mit der ersten oder zweiten Membran-Elektroden-Einheit (52) derart gekoppelt wird, dass die elektrisch leitfähige Verbindung über das anodenseitige oder kathodenseitige Kontaktelement (28, 32) durch Sintern der zu sinternden Komponente (20) hergestellt wird.

10. Verfahren nach Anspruch 9, **dadurch gekennzeichnet, dass** nur auf der der Anode (12) zugewandten Seite der Interkonnektoranordnung (10) die zu sinternde Komponente (20) angeordnet wird.

11. Verfahren nach Anspruch 9 oder 10, **dadurch gekennzeichnet, dass** die Interkonnektoranordnung (10) auf ihrer der Kathode zugewandten Seite ausschließlich über Kontaktelemente (30) mit der zweiten Membran-Elektroden-Einheit (52) gekoppelt wird.

12. Verfahren nach einem der Ansprüche 9 bis 11, **dadurch gekennzeichnet, dass** die elektrisch leitfähige Verbindung durch Sintern einer Glaskeramikdichtung (20) als zu sinternde Komponente hergestellt wird.

13. Verfahren nach einem der Ansprüche 9 bis 12, **dadurch gekennzeichnet, dass** auf der der Anode (12) zugewandten Seite der Interkonnektoranordnung (10) zumindest ein als Nickelschaum ausgebildetes Kontaktelement (28) zur Herstellung der elektrisch leitfähigen Verbindung mit der ersten Membran-Elektroden-Einheit (52) angeordnet wird.

14. Verfahren nach einem der Ansprüche 9 bis 13, **dadurch gekennzeichnet, dass** eine Mehrzahl von der Kathode (16) zugewandten elektrisch leitfähigen Kontaktelementen (30) der Interkonnektoranordnung (10) angeordnet wird, wobei die Mehrzahl der kathodenseitig vorgesehenen elektrisch leitfähigen Kontaktelemente (30) gleichmäßig über einer gesamten Fläche der Kathode (16) der zweiten Membran-Elektroden-Einheit (52) zur Kopplung mit der zweiten Membran-Elektroden-Einheit (52) angeordnet wird.

15. Verfahren nach einem der Ansprüche 9 bis 14, **dadurch gekennzeichnet, dass** eine Fläche der Kathode (16) der jeweiligen Membran-Elektroden-Einheit (52) derart ausgebildet wird, dass sie im Wesentlichen der Fläche eines Elektrolyten (14) der jeweiligen Membran-Elektroden-Einheit (52) entspricht.

16. Verfahren nach einem der Ansprüche 9 bis 15, **dadurch gekennzeichnet, dass** eine Fläche der Kathode (16) und/oder des Elektrolyten (14) der jeweiligen Membran-Elektroden-Einheit (52) derart ausgebildet wird, dass sie größer als eine Fläche der Anode (12) der jeweiligen Membran-Elektroden-Einheit (52) ist.

17. Brennstoffzellenstapel, insbesondere SOFC-Brennstoffzellenstapel, der zumindest eine Kontaktanordnung nach einem der Ansprüche 1 bis 8 umfasst

## Claims

1. Contact arrangement for a fuel cell stack, in particular for an SOFC fuel cell stack, having an interconnector arrangement (10), which is arranged for establishing an electrically conducting connection between an anode (12) of a first membrane electrode assembly (52) and a cathode (16) of a second membrane electrode assembly (52) via at least one contact element on an anode side and at least one contact element on a cathode side, **characterized in that** at one side of the interconnector arrangement (10) only, the side of the interconnector arrangement (10) facing the anode (12) or the cathode (16), at least one component to be sintered is provided which is coupled to the first or second membrane electrode assembly (52) such that the electrically conducting connection can be established via the contact element (28, 32) on the anode side or the cathode side by sintering of the component (20) to be sintered.

2. Contact arrangement according to claim 1, **characterized in that** the component (20) to be sintered is arranged on the side of the interconnector arrangement (10) facing the anode (12) only.

3. Contact arrangement according to claim 1 or 2, **characterized in that** the interconnector arrangement (10) on its side facing the cathode is coupled to the second membrane electrode assembly (52) exclusively via contact elements (30).

4. Contact arrangement according to one of the claims 1 to 3, **characterized in that** the component to be sintered is formed by a glass ceramics seal (20).

5. Contact arrangement according to claim one of the claims 1 to 4, **characterized in that** at least one contact element (28) formed as nickel foam for establishing the electrically conducting connection with the first membrane electrode assembly (52) is provided on the side of the interconnector arrangement (10) facing the anode (12).

6. Contact arrangement according to one of the claims 1 to 5, **characterized in that** a plurality of electrically conducting contact elements (30) of the interconnector arrangement (10) facing the cathode (16) is provided, the plurality of electrically conducting contact elements (30) provided on the cathode side being arranged regularly over a total area of the cathode (16) of the second membrane electrode assembly (52) for coupling to the second membrane electrode assembly (52).

7. Contact arrangement according to one of the claims 1 to 6, **characterized in that** an area of the cathode (16) of the respective membrane electrode assembly (52) essentially corresponds to the area of an electrolyte (14) of the respective membrane electrode assembly (52).

8. Contact arrangement according to one of the claims 1 to 7, **characterized in that** an area of the cathode (16) and/or the electrolyte (14) of the respective membrane electrode assembly (52) is larger than an area of the anode (12) of the respective membrane electrode assembly (52).

9. Method for assembling a fuel cell stack, in particular an SOFC fuel cell stack, from at least one contact arrangement comprising an interconnector arrangement (10), which is arranged for establishing an electrically conducting connection between an anode (12) of a first membrane electrode assembly (52) and a cathode (16) of a second membrane electrode assembly (52) via at least one contact element (28, 32) on an anode side and at least one contact element (28, 32) on a cathode side, **characterized by** providing at least one component to be sintered on one side of the interconnector arrangement (10) only, the side of the interconnector arrangement (10) facing the anode (12) or the cathode (16), and coupling it to the first or second membrane electrode assembly (52) such that the electrically conducting connection via the contact element (28, 32) on the anode side or the cathode side is established by sintering the component (20) to be sintered.

10. Method according to claim 9, **characterized by** arranging the component to be sintered (20) on the side of the interconnector arrangement (10) facing the anode (12) only.

11. Method according to claim 9 or 10, **characterized by** coupling the interconnector arrangement (10) on its side facing the cathode to the second membrane electrode assembly (52) exclusively via contact elements (30).

12. Method according to one of claims 9 to 11, **characterized by** manufacturing the electrically conducting connection by sintering a glass ceramics seal (20) as component to be sintered.

13. Method according to one of claims 9 to 12, **characterized by** arranging at least one contact element (28) formed as nickel foam on the side of the interconnector arrangement (10) facing the anode (12) for establishing the electrically conducting connection with the first membrane electrode assembly (52).

14. Method according to one of claims 9 to 13, **characterized by** arranging a plurality of electrically conducting contact elements (30) of the interconnector arrangement (10) facing the cathode (16), the plurality of electrically conducting contact elements (30) provided on the cathode side being arranged regularly over a total area of the cathode (16) of the second membrane electrode assembly (52) for coupling to the second membrane electrode assembly (52).

15. Method according to one of claims 9 to 14, **characterized by** forming an area of the cathode (16) of the respective membrane electrode assembly (52) such that it essentially corresponds to the area of an electrolyte (14) of the respective membrane electrode assembly (52).

16. Method according to one of claims 9 to 15, **characterized by** forming an area of the cathode (16) and/or the electrolyte (14) of the respective membrane electrode assembly (52) such that it is larger than an area of the anode (12) of the respective membrane electrode assembly (52).

17. Fuel cell stack, in particular SOFC fuel cell stack, comprising at least one contact arrangement according to one of claims 1 to 8.

## Revendications

1. Ensemble de contact pour piles de cellules à combustible, en particulier pour piles de cellules à combustible dites SOFC, l'ensemble de contact présentant un ensemble d'interconnexion (10) qui est disposé entre une anode (12) d'une première unité (52) d'électrode et membrane et une cathode (16) d'une deuxième unité (52) d'électrode et membrane pour établir une liaison électriquement conductrice par au moins un élément de contact (28) disposé côté anodique et au moins un élément de contact (32) disposé côté cathodique, **caractérisé en ce que** au moins un composant à fritter est prévu uniquement sur le côté de l'ensemble d'interconnexion (10), à savoir le côté de l'ensemble d'interconnexion (10) tourné vers l'anode (12) ou tourné vers la cathode (16), et est couplé à la première ou à la deuxième unité (52) d'électrode et membrane de telle sorte que la liaison électriquement conductrice puisse être établie par l'intermédiaire de l'élément de contact (28, 32) disposé côté anodique ou côté cathodique par frittage du composant (20) à fritter.

2. Ensemble de contact selon la revendication 1, **caractérisé en ce que** le composant à fritter (20) est disposé uniquement sur le côté de l'ensemble d'interconnexion (10) tourné vers l'anode (12).

3. Ensemble de contact selon les revendications 1 ou 2, **caractérisé en ce que** sur son côté tourné vers la cathode, l'ensemble d'interconnexion (10) est couplé à la deuxième unité (52) de membrane et électrode uniquement par des éléments de contact (30).

4. Ensemble de contact selon l'une des revendications 1 à 3, **caractérisé en ce que** le composant à fritter est formé d'un joint d'étanchéité (20) en vitrocéramique.

5. Ensemble de contact selon l'une des revendications 1 à 4, **caractérisé en ce qu'**au moins un élément de contact (28) configuré comme mousse de nickel est prévu sur le côté de l'ensemble d'interconnexion (10) tourné vers l'anode (12) pour établir la liaison électriquement conductrice avec la première unité (52) d'électrode et membrane.

6. Ensemble de contact selon l'une des revendications 1 à 5, **caractérisé en ce que** l'ensemble d'interconnexion (10) présente plusieurs éléments de contact électriquement conducteurs (30) tournés vers la cathode (16), les différents éléments de contact électriquement conducteurs (30) prévus côté cathodique étant disposés uniformément sur toute la surface de la cathode (16) de la deuxième unité (52) d'électrode et membrane pour assurer l'accouplement avec la deuxième unité (52) d'électrode et membrane.

7. Ensemble de contact selon l'une des revendications 1 à 6, **caractérisé en ce que** la superficie de la cathode (16) de chaque unité (52) d'électrode et membrane correspond essentiellement à la superficie de l'électrolyte (14) de ladite unité (52) d'électrode et membrane.

8. Ensemble de contact selon l'une des revendications 1 à 7, **caractérisé en ce que** la superficie de la cathode (16) et/ou de l'électrolyte (14) de chaque unité (52) d'électrode et membrane est supérieure à la superficie de l'anode (12) de cette unité (52) d'électrode et membrane.

9. Procédé d'assemblage d'une pile de cellules à combustible, en particulier d'une pile de cellules à combustible dite SOFC, à partir d'au moins un ensemble de contact qui comporte un ensemble d'interconnexion (10) qui est disposé entre une anode (12) d'une première unité (52) d'électrode et membrane et une cathode (16) d'une deuxième unité (52) d'électrode et membrane pour établir une liaison électriquement conductrice par au moins un élément de contact (28) disposé côté anodique et au moins un élément de contact (32) disposé côté cathodique, **caractérisé en ce que** au moins un composant à fritter est prévu uniquement sur un côté de l'ensemble d'interconnexion (10), le côté de l'ensemble d'interconnexion (10) qui est tourné vers l'anode (12) ou vers la cathode (16), et est couplé à la première ou à la deuxième unité (52) d'électrode et membrane de telle sorte que la liaison électriquement conductrice soit établie par l'intermédiaire de l'élément de contact (28, 32) disposé côté anodique ou côté cathodique par frittage du composant (20) à fritter.

10. Procédé selon la revendication 9, **caractérisé en ce que** le composant à fritter (20) est disposé uniquement sur le côté de l'ensemble d'interconnexion (10) tourné vers l'anode (12).

11. Procédé selon les revendications 9 ou 10, **caractérisé en ce que** sur son côté tourné vers la cathode, l'ensemble d'interconnexion (10) est couplé à la deuxième unité (52) d'électrode et membrane uniquement par des éléments de contact (30).

12. Procédé selon l'une des revendications 9 à 11, **caractérisé en ce que** la liaison électriquement conductrice est établie par frittage d'un joint d'étanchéité (20) en vitrocéramique utilisé comme composant à fritter.

13. Procédé selon l'une des revendications 9 à 12, **caractérisé en ce que** pour établir la liaison électriquement conductrice avec la première unité (52) à électrode et membrane, au moins un élément de contact (28) configuré comme mousse de nickel est disposé sur le côté de l'ensemble d'interconnexion (10) tourné vers l'anode (12).

14. Procédé selon l'une des revendications 9 à 13, **caractérisé en ce que** l'ensemble d'interconnexion (10) présente plusieurs éléments de contact électriquement conducteurs tournés vers la cathode (16), les différents éléments de contact électriquement conducteurs (30) prévus sur le côté cathodique étant disposés uniformément sur toute la surface de la cathode (16) de la deuxième unité (52) d'électrode et membrane pour assurer l'accouplement avec la deuxième unité (52) d'électrode et membrane.

15. Procédé selon l'une des revendications 9 à 14, **caractérisé en ce que** la superficie de la cathode (16) de chaque unité (52) d'électrode et membrane correspond essentiellement à la superficie d'un électrolyte (14) de ladite unité (52) d'électrode et membrane.

16. Procédé selon l'une des revendications 9 à 15, **caractérisé en ce que** la superficie de la cathode (16) et/ou de l'électrolyte (14) de chaque unité (52) d'électrode et membrane est supérieure à la superficie de l'anode (12) de cette unité (52) d'électrode et membrane.

17. Pile de cellules à combustible, en particulier pile de cellules à combustible dite SOFC, comportant au moins un ensemble de contact selon l'une des revendications 1 à 8.
